Europäisches Patentamt

European Patent Office

Office européen des brevets

(19)

(11) **EP 1 207 630 A2**

(12) **EUROPEAN PATENT APPLICATION**

(43) Date of publication:
   **22.05.2002 Bulletin 2002/21**

(51) Int Cl.$^7$: **H04B 7/08**

(21) Application number: **01302967.3**

(22) Date of filing: **29.03.2001**

(84) Designated Contracting States:
   **AT BE CH CY DE DK ES FI FR GB GR IE IT LI LU MC NL PT SE TR**
   Designated Extension States:
   **AL LT LV MK RO SI**

(30) Priority: **19.10.2000 JP 2000319108**

(71) Applicant: **Hitachi Kokusai Electric Inc.**
   **Tokyo 164-0003 (JP)**

(72) Inventor: **Kitahara, Minako**
   **Tokyo 164-0003 (JP)**

(74) Representative: **Nicholls, Michael John**
   **J.A. KEMP & CO.**
   **14, South Square**
   **Gray's Inn**
   **London WC1R 5JJ (GB)**

(54) **Transmitter and receiver for radio communication using adaptive antenna array for directivity control**

(57)   In a receiver or the like for providing each of a plurality of antennas with a receive weight, thereby controlling receive directivity of the antennas as a whole, and receiving a signal transmitted from a mobile station device serving as an opposite party of communication, it is desired to calculate weights fast. For that purpose, an arrival direction and/or power of a signal from a mobile station device is detected. A solution of a receive weight control method is calculated as receive weights of respective antennas, based on a result of the detection, under such a condition that a received quality of a signal transmitted from a mobile station device serving as an opposite party of communication becomes favorable. By using the calculated receive weights, the signal is received.

FIG. 1

**Description**

BACKGROUND OF THE INVENTION

Field of the Invention

The present invention relates to a receiver for controlling the receive directivity of a plurality of antennas as a whole and receiving a signal from a mobile station device serving as an opposite party of communication, and a transceiver for controlling the transmit directivity of a plurality of antennas as a whole and transmitting a signal to a mobile station device serving as an opposite party of communication. In particular, the present invention relates to a technique for improving qualities of communication with a mobile station device by, for example, fast calculating weights.

Description of the Related Art

For example, in IMT-2000 standardization, not only audio communication but also fast communication service such as access using Internet and image transmission is demanded. As a radio transmission scheme directed to the IMT-2000 standardization, for example, the DS-CDMA (Direct Sequence - Code Division Multiple Access) scheme capable of altering the communication rate by changing a spreading factor is being studied extensively.

In a radio communication system adopting the DS-CDMA scheme, different spreading codes are assigned to, for example, respective mobile station devices. In a CDMA base station device, a received signal is despread by using a spreading code assigned to a specific mobile station device, and thereby a signal corresponding to the pertinent mobile station device can be separated from the received signal. In addition, by transmitting a signal (spread signal) spread by using a spreading code assigned to a specific mobile station device, the CDMA base station device can transmit the pertinent signal to the pertinent mobile station device.

In the radio communication system using the DS-CDMA scheme as described above, a plurality of mobile station devices can use the same frequency band by using the above described spreading code. Since a plurality of mobile station devices use the same frequency band in common in the above described radio communication system, however, a spreading signal communicated by a different mobile station device becomes an interference signal to a spreading signal communicated by a certain mobile station device. Therefore, it has been studied to provide a CDMA base station device with an adaptive array antenna in order to remove the interference, in the case where, for example, multi-rate service is conducted by using the DS-CDMA scheme. Hereafter, this will be described.

By the way, the above described multi-rate service which is a feature of the DS-CDMA scheme refers to service capable of utilizing a plurality of communication rates. In this service, for example, audio communication similar to the conventional audio communication can be conducted, and communication of data and image data of which fastness is required can be coped with by utilizing fast communication rate.

The above described adaptive array antenna is such an antenna formed of a plurality of antennas that the directivity of the antennas as a whole can be controlled. To be concrete, the directivity at the time of reception (receive directivity) and the directivity at the time of transmission (transmit directivity) can be controlled by providing respective antennas with receive weights or transmit weights.

In the above described multirate service, the power level of a communicated signal becomes greater in general as the communication rate becomes higher. This is described in, for example, "'Wideband Wireless Access Based on DS-CDMA', IEICE Trans. Commun., vol. E81-B, no. 7, pp. 1305 - 1316, July 1998, F. Adachi and M. Sawahashi".

In the case where, for example, a signal having a comparatively high communication rate (high rate user signal) and a signal having a comparatively low communication rate (low rate user signal) are transmitted simultaneously from a plurality of mobile station devices, therefore, the high rate user signal exerts great interference on the low rate user signal. In order to eliminate such a problem, it has been studied to remove the interference at the time of reception by providing a CDMA base station device with an adaptive array antenna as described above. An example of this study is disclosed in, for example, "'Pilot Symbol-Assigned Decision-Directed Coherent Adaptive Array Diversity for DS-CDMA Mobile Radio Reverse Link', IEICE Trans. Foundamentals, vol. E80-A, no. 12, pp. 2445 - 2454, Dec. 1997, S. Tanaka, M. Sawahashi, and F. Adachi", and "'Experiments on Coherent Adaptive Antenna Array Diversity for Wideband CDMA Mobile Radio", IEEE Veh. Technol, Conf. (VTC'99) Rec., vol. 1, pp. 243 - 248, May 1999, S. Tanaka, A. Harada, M. Sawahashi, and F. Adachi".

To be concrete, in the interference removal at the time of reception conducted by a CDMA base station device, such a receive directivity as to reduce preferentially a reception interference signal having a high power level is implemented by controlling the receive weights of the adaptive array antenna. For example, in the case where the above described high rate user signal and the above described low rate user signal exist as interference signals other than a signal desired to be received, the high rate user signal which becomes an interference signal having a comparatively high power level is preferentially reduced. As a result, the received signal qualities are improved.

On the other hand, it has been begun to be studied to improve the received signal qualities at mobile station devices by making the CDMA base station device control the transmit weights of the adaptive array antenna, not only for up communication (up link) from the mobile station device to the CDMA base station device but also for down communication (down link) from the CDMA base station device to the mobile station device. An example of this study is disclosed in, for example, "'Characteristics of indoor transmission experiments of adaptive antenna array transmission diversity on W-CDMA down link', Technical Report of The Institute of Electronics, Information and Communication Engineers, RCS99-18, May 1999, Harada, Tanaka, Sawahashi and Adachi".

To be concrete, there has been studied a CDMA base station device which controls the transmit directivity of the adaptive array antenna by using transmit weights based on receive weights obtained when the interference removal at the time of reception is conducted as described above. The term "transmit weights based on receive weights" means weights obtained by conducting predetermined calibration processing on the receive weights. The term "predetermined calibration processing" means processing of removing the influence caused by the fact that the complex amplitude characteristics of an RF (radio) receiver included in the CDMA base station device and the complex amplitude characteristics of an RF transmitter differ from antenna to antenna and from path to path. The receive weights are determined on the basis of a received signal obtained, for example, after despreading.

For example, in the interference removal at the time of reception, a received antenna pattern is formed so as to increase the antenna gain in such a direction that a signal desired to be received (which is a signal transmitted from a mobile station device serving as an opposite party of communication and desired to be received) arrives and so as to decrease the antenna gain in such a direction that an interference signal arrives. As a transmit antenna pattern at the time of transmission, there is formed a pattern that implements an antenna gain similar to the above described received antenna pattern.

As for the way of determining the receive directivity of the adaptive array antenna in the above described CDMA base station device, it has been studied to determine and adopt such receive weights as to minimize the receive power level of signals other than the signal desired to be received, by using, for example, MMSE (Minimum Mean Square Errors) control.

In the foregoing description, the case where weights are determined on the basis of the signal obtained after despreading has been mentioned. However, there may be adopted such a scheme that weights are determined on the basis of, for example, the signal before despreading. Such a scheme is referred to as "conventional scheme". For example, in an embodiment described later, the "conventional scheme" is used as a conventional example for comparing in effect with the case where an embodiment of the present invention is adopted. For convenience of description, the same characters as characters used in embodiments described later (such as the total number N of antennas and signal xi(k)) will be used in the ensuing description.

First, the total number of antennas (antenna elements) included in the adaptive array antenna is denoted by N. A signal inputted to an ith (where i = 1 to N) antenna is denoted by $x_i(k)$. A weight of the ith antenna is denoted by $\omega_i$. An input signal vector $X(k)$ is defined as represented by equation (1). A weight vector W is defined as represented by equation (1). Here, $X(k)$ and W represent vectors, and k represents time. In the expressions, "$^T$" represents transposition.

$$X(k) = \{\, x1(k),\ x2(k),\ \cdots,\ xN(k)\}^T \tag{1}$$

$$W = \{\, \omega1,\ \omega2,\ \cdots,\ \omega N\,\}^T \tag{2}$$

In this case, a received signal $y(k)$ of adaptive array antenna as a whole is represented as shown in equation (3). In the equation, "·" represents multiplication. This holds true in other equations herein as well.

$$y(k) = \sum_{i=1}^{N} \omega i \cdot x1(k) = W^T X(k) \quad \cdots \ (3)$$

In the signal inputted to the antenna, a desired signal (reference signal) is denoted by $r(k)$. An error signal $e(k)$ is defined as represented by equation (4).

$$e(k) = y(k) - r(k) \tag{4}$$

Each $\omega i$ is updated successively so as to make the above described error signal e(k) small. Denoting a step factor of the update by $\mu$, an update equation is represented by equation (5).

$$W(k+1) = W(k) + \mu \cdot e(k) \cdot X(k) \qquad (5)$$

If the weight vector is continuously updated as described above, then each weight $\omega i$ gradually approaches an optimum weight which minimizes the error signal e(k). The update algorithm heretofore described is generally known as LMS (Least Mean Square) algorithm.

As indicated by the equation (5), the speed of convergence to optimum weights becomes faster as the power of, for example, the signal xi(k) incident on the antenna becomes greater. The speed of convergence becomes slower as the step factor $\mu$ becomes smaller.

In some cases, therefore, there is used an algorithm that makes the convergence time nearly the constant irrespective of the antenna incidence power by using, for example, the step factor normalized by the antenna incidence power $\mu' = \mu / (X(k)^H X(k))$ instead of the step factor. Such an algorithm is known as N-LMS (Normalized LMS). Here, "$^H$" represents complex conjugate transposition.

The N-LMS is described in, for example, "'Application of Antenna Arrays to Mobile Communications, Part 2: Beam-Forming and Direction-of-Arrival Considerations', Proc. IEEE, vol. 85, no. 8, pp. 1195 - 1245, Aug. 1997, L.C. Godara".

In the "conventional scheme", the weights $\omega i$ determined as described above (and subjected to predetermined calibration processing as described above) are used in down communication. By using such weights $\omega i$, the antenna gain for the direction of the interference signal having high power is preferentially reduced as described above. For example, in an adaptive array antenna for transmitting a high rate user signal to a certain high rate user, the antenna gains for the multipath direction concerning the high rate user signal and the high rate user path directions concerning other high rate users are preferentially lowered.

As for a method for estimating the arrival direction of a received signal, there are known a computation method such as a MUSIC method described in, for example, "'High resolution estimation using MUSIC method', Trans. IEE of Japan, Vol. 116-A, No. 8, Aug. 1996, Yasutaka Ogawa and Kiyohiko Ito", and a computation method such as an ESPRIT method described in, for example, "'ESPRIT-Estimation of Signal Parameters via Rotational Invariance Techniques', IEEE Trans., ASSP-37, pp. 984 - 995, July. 1989, R. Roy and T. Kailath".

In a base station device having the conventional adaptive array antenna, weights of respective antennas are successively updated and determined by using an algorithm such as the LMS as described above. And in radio communication from the mobile station device to the base station device (radio communication in the up channel), the receive weights that are convergence results obtained by using the LMS or the like implement reception with the best SINR (Signal to Interference and Noise Ratio). The SINR is a value representing the ratio of the (desired) signal power to the interference and noise power. A larger value (SINR) represents a more favorable communication quality.

In the successive update processing using the algorithm such as LMS or the like, it takes a time for the weights to converge. This results in a disadvantage that fast reception processing cannot be conducted.

Furthermore, in the case where there is conducted such communication that a quality in its up channel (a channel used for communication from the mobile station device to the base station device) differs from a quality in its down channel (a channel used for communication from the base station device to the mobile station device), the weight generation method using the LMS or the like has a disadvantage that the communication situation of the down channel cannot be coped with, because the transmit directivities of respective antennas are controlled according to the communication situation of the up channel.

In an example of the case where there is conducted such communication that a quality of the up channel differs from a quality of the down channel, a signal of low power is transmitted from a certain mobile station device with a low rate in the up channel, whereas a signal of high power is transmitted to the mobile station device at a high rate in the down channel for the purpose of data downloading or the like. In such a case, transmit weights are formed in the conventional technique assuming that a signal of low power is transmitted to the mobile station device at a low rate in the down channel as well. As a matter of fact, therefore, the signal of high power becomes a great signal to other mobile station devices. In the down channel, therefore, much interference than the up channel is given to other mobile station devices, and received signal qualities of other mobile station devices are degraded.

A concrete example will now be described. In the CDMA scheme, the cause of interference occurrence differs depending upon whether the channel is up or down. Even if the above described predetermined calibration processing is conducted on receive weights implementing the best SINR in the up channel, therefore, transmit weights obtained therefrom are not necessarily the best in the down channel as well, resulting in a disadvantage.

Causes of interference occurrence in the communication of the CDMA scheme will now be described.

In the CDMA scheme, interference between a plurality of spread signals spread by different spreading codes is reduced by, for example, assigning spreading codes that are orthogonal to each other to respective mobile station devices (respective users). In the up channel, however, a plurality of spread signals (spreading codes) transmitted from a plurality of mobile station devices arrive at the base station device asynchronously. Therefore, orthogonality between a plurality of spread signals (spreading codes) is destroyed. As a result, interference between (spreading codes) occurs. On the other hand, in the down channel, the base station device synchronizes spreading codes of spread signals for respective mobile station devices, and transmits the spread signals. If the propagation path is one path, therefore, interference can be removed completely owing to the orthogonality. In a multipath propagation path in which a signal communicated between the base station device and the mobile station device is propagated through a plurality of paths, however, a plurality of spread signals transmitted in synchronism collide with each other asynchronously (due to the multipath effect). As a result, interference between (spreading codes) occurs. In this way, the situation of interference occurrence differs depending upon whether the channel is up or down.

As transmit weights used to transmit a signal from the base station device to the mobile station device, weights obtained by calibrating receive weights obtained by using the above described LMS or the like are in general used, as described above. In the conventional calibration, however, the difference in communication situation between the up channel and the down channel cannot be compensated sufficiently.

Furthermore, for example, in the base station device having the conventional adaptive array antenna, the transmit antenna pattern is formed giving top priority to the removal of the interference signal as described above. For example, therefore, in the case where a great interference signal arrives from a direction near a direction (i.e., the arrival direction of the desired reception signal) in which a desired transmission signal (i.e., a signal desired to be transmitted to a mobile station device serving as the opposite party of communication) is transmitted, such a transmit antenna pattern as to making the antenna gain in the nearby direction small is formed. At this time, the maximum radiation direction of the transmit antenna pattern disadvantageously is deviated from the original transmission direction of the desired transmission signal (i.e., the arrival direction of the desired reception signal). And the transmit signal level in the pertinent transmission direction (i.e., the main lobe direction) disadvantageously becomes small.

In the down communication from the base station device to a mobile station device, the influence of interference poses a problem especially in the case where a signal transmitted from the base station device to a high rate user is received by a low rate user. The signal becomes an interference signal of high power for the low rate user.

In addition to the above described disadvantages, the base station device having the conventional adaptive array antenna has the following disadvantage. In the case where the number of mobile communication devices with which the base station device can communicate is large, it is difficult to make the antenna gain sufficiently small at the time of transmission to another mobile station device existing in such a direction that the angle is largely displaced from the arrival direction of the desired reception signal, i.e., it is difficult to make the interference signal transmitted in that direction sufficiently small.

To be concrete, in adaptive array antennas, it is in general possible to remove {the total number of antennas (antenna elements) - 1} interference signals. The number of removable interference signals is called the degree of freedom of antenna. If, for example, the number of mobile station devices (the number of users) accommodated by one base station device becomes large, however, the degree of freedom of antenna in the adaptive array antenna becomes insufficient. This results in a disadvantage that the quality of communication with a desired mobile station device cannot be made favorable.

In other words, especially in the case where the number of mobile station devices existing in a possible communication area of the base station device, the degree of freedom of the adaptive array antenna becomes overwhelmingly insufficient, and the effect of reduction of the antenna gain in the low rate user direction becomes very small.

Furthermore, in the case where an interference signal of high power exists near the desired signal (in the main lobe) as described above, there is formed such a transmit antenna pattern as to reduce the antenna gain in the main lobe as described above. As a result, the maximum radiation direction is deviated and radiation in the side lobe direction is increased. In this way, if the degree of freedom of the adaptive array antenna is used for the interference signal existing near the desired signal, it means the degree of freedom is used wastefully.

SUMMARY OF THE INVENTION

In view of the above described circumstances of the conventional technique, the present invention has been made.

An object of the present invention is to provide a receiver capable of improving the qualities of communication with a mobile station device by providing each of a plurality of antennas with a receive weight, thereby controlling the receive directivity of these antennas as a whole, and calculating, for example, the receive weights fast when receiving a signal transmitted from a mobile station device serving as the opposite party of communication.

Another object of the present invention is to provide a transceiver capable of improving the qualities of communication with a mobile station device by receiving a signal transmitted from a mobile station device by using a plurality of antennas, providing each of these antennas with a transmit weight, thereby controlling the transmit directivity of these antennas as a whole, and calculating, for example, the transmit weights fast when transmitting a signal transmitted to a mobile station device serving as the opposite party of communication.

In order to achieve the above described objects, a receiver according to the present invention provides each of a plurality of antennas with a receive weight as described below, thereby controls receive directivity of the antennas as a whole, and receives a signal transmitted from a mobile station device serving as an opposite party of communication (reception).

In other words, the receiver detects an arrival direction and/or power of a signal from a mobile station device, and calculates a solution of a receive weight control method as receive weights of respective antennas, based on a result of the detection, under such a condition that a received quality of a signal transmitted from a mobile station device serving as an opposite party of communication becomes favorable, and receives the signal by using the calculated receive weights.

Thus, successive update of the receive weights as in the conventional LMS is not conducted, but a solution obtained by a receive weight control method based on the arrival direction and power of the signal from the mobile station device is calculated as the receive weights. Therefore, the receive weights can be calculated fast. As a result, the quality of communication with the mobile station device can be improved.

The receive weights of respective antennas are adjustment values of the amplitude and/or phase conducted on a signal for respective antennas when receiving the same signal to be received, from respective antennas. As for the receive weights, receive weights for adjusting both the amplitude and phase need not be necessarily used. Receive weights for adjusting only the amplitude or receive weights for adjusting only the phase may be used. By providing a plurality of antennas in the receiver with such receive weights, the antennas can implement receive directivity according to the receive weights as a whole.

As for the number of antennas, there are no special limits, but various numbers may be used.

As for the arrangement of the antennas, there are no special limits, but various arrangements may be used.

In a multipath environment, a signal transmitted from a mobile station device arrives at a receiver via a plurality of paths. When communication is conducted in such a multipath environment, a signal arriving via one path among the paths is received in some cases. In such a case, the signal of that path is regarded as the signal transmitted from the mobile station device serving as the opposite party of communication mentioned in the present invention. When receiving the signal of that path, signals of other paths are regarded as, for example, interference signals.

Furthermore, in the case where a signal transmitted from a mobile station device arrives at the receiver via a plurality of paths, it is also possible to combine (a plurality of) signals arriving via a plurality of paths (by using, for example, the RAKE synthesis or the like) . Thereby, the quality of communication with the mobile station device can be improved.

As for the mode for detecting the arrival direction and/or power of a signal from a mobile station device, such a mode as to detect only the arrival direction may be used. Such a mode as to detect only the power, or such a mode as to detect both the arrival direction and power may also be used.

As for the mode for detecting the arrival direction and/or power, it is desirable to detect strict arrival direction and/or power value. However, the present invention incorporates such a mode as to detect the arrival direction and/or power by estimation.

As for power mentioned in the present invention, it is also possible as a preferred mode to detect a temporal (i.e., over a certain time width) average (average power) of power of a signal from a mobile station device.

As for the receive weight control method based on the detection result mentioned in the present invention, a receive weight control method based upon the detection result of the arrival direction is used, in the case where only the arrival direction is detected in the foregoing description. In the case where only the power is detected in the foregoing description, a receive weight control method based upon the detection result of the power is used. In the case where both the arrival direction and power is detected in the foregoing description, a receive weight control method based upon both the detection result of the arrival direction and the detection result of the power is used.

As for the mode of calculating the receive weights of respective antennas by using a receive weight control method based on the detection result of (the arrival direction and/or power), there may be used such a mode as to calculate the receive weights of respective antennas according to a receive weight control method using the detection result (as it is). Or there may be used such a mode as to calculate the receive weights of respective antennas according to a receive weight control method using a result obtained by correcting the detection result. Alternatively, there may be used such a mode as to select a receive weight control method from among a plurality of (for example, previously prepared) receive weight control methods on the basis of the detection result and calculate the receive weights of respective antennas according to the selected receive weight control method.

As the receive weight control method, it is possible to use the co-phase equal amplitude excitation method of calculating the receive weights on the basis of the arrival direction of a signal from the mobile station device, or an SINR reference method of calculating the receive weights on the basis of the arrival direction and power of a signal from the mobile station device (for example, by calculating the Wiener solution described later).

As for the condition that the received signal quality becomes favorable, it is possible to use such a condition that the receive power level becomes high, such a condition that SINR becomes great, or such a condition that the SNR (Signal to Noise Ratio) becomes great. In the above described co-phase equal amplitude excitation method, there is conducted such computation as to maximize the receive level of a signal from a mobile station device serving as an opposite party of communication. In the above described SINR reference method, there is conducted such computation as to maximize the SINR of a signal from a mobile station device serving as an opposite party of communication.

The solution mentioned in the present invention is a solution obtained by the receive weight control method mentioned in the present invention as described above. The solution corresponds to the receive weights of respective antennas.

Some preferred configuration examples of a receiver according to the present invention inclusive of the configurations heretofore described are described below.

In a configuration example of the present invention, a receiver for providing each of a plurality of antennas with a receive weight, thereby controlling receive directivity of the antennas as a whole, and receiving a signal transmitted from a mobile station device serving as an opposite party of communication includes:

arrival direction detection means for detecting an arrival direction of a signal from a mobile station device serving as an opposite party of communication; and reception means for calculating a solution of a co-phase equal amplitude excitation method as receive weights of respective antennas, based on the detected arrival direction, under such a condition that a receive level of a signal transmitted from a mobile station device serving as an opposite party of communication becomes large, and receiving the signal by using the calculated receive weights. This is a configuration example of a receiver using the co-phase equal amplitude excitation method as the receive weight control method.

In a configuration example of the present invention, a receiver for providing each of a plurality of antennas with a receive weight, thereby controlling receive directivity of the antennas as a whole, and receiving a signal transmitted from a mobile station device serving as an opposite party of communication includes:

arrival direction detection means for detecting an arrival direction of a signal from a mobile station device; power detection means for detecting power of the signal from the mobile station device; and reception means for calculating a solution of an SINR reference method as receive weights of respective antennas, based on the detected arrival direction and detected power, under such a condition that an SINR of a signal transmitted from a mobile station device serving as an opposite party of communication becomes large, and receiving the signal by using the calculated receive weights. This is a configuration example of a receiver using the SINR reference method as the receive weight control method.

In a configuration example of the present invention, a receiver for providing each of a plurality of antennas with a receive weight, thereby controlling receive directivity of the antennas as a whole, and receiving a signal transmitted from a mobile station device serving as an opposite party of communication includes:

arrival direction detection means for detecting an arrival direction of a signal from a mobile station device; power detection means for detecting power of the signal from the mobile station device; and reception means for selecting a receive weight control method based on the detected arrival direction and detected power, calculating receive weights of respective antennas by using the selected receive weight control method so that a received quality of a signal from a mobile station device serving as an opposite party of communication may become better, and receiving the signal by using the calculated receive weights. This is a configuration example of a receiver which selects a receive weight control method on the basis of the detected arrival direction and power.

In such a configuration, an optimum receive weight control method can be selected according to, for example, the detected arrival direction and/or power. As a concrete example, there can be used such a control scheme that when receiving a signal of low power from a mobile station device serving as an opposite party of communication, the co-phase equal amplitude excitation method is selected and the receive weights are controlled by using the co-phase equal amplitude excitation method, whereas when receiving a signal of high power from a mobile station device serving as an opposite party of communication, the SINR reference method is selected and the receive weights are controlled by using the SINR reference method. Which receive weight control method should be selected may be determined arbitrarily by considering features of respective receive weight control methods. As an example, the co-phase equal amplitude excitation method has an advantage that a solution can be calculated with a smaller amount of computation than that of the SINR reference method.

As an example, in the receiver as heretofore described, the above described power detection means detects a time average value of power as power of a signal from a mobile station device.

As an example, the receiver as heretofore described is installed in a base station device of a mobile radio communication system and/or a relay amplifying device (relay amplifier) of a mobile radio communication system.

A transceiver according to the present invention will now be described.

In order to achieve the above described objects, a transceiver according to the present invention receives a signal transmitted from a mobile station device by using a plurality of antennas, provides each of a plurality of antennas with a receive weight as described below, thereby controls receive directivity of the antennas as a whole, and receives a signal transmitted from a mobile station device serving as an opposite party of communication (transmission).

In other words, the transceiver detects an arrival direction and/or power of a signal from a mobile station device, and calculates a solution of a transmit weight control method as transmit weights of respective antennas, based on a result of the detection, under such a condition that a quality of a signal to be received at a mobile station device serving as an opposite party of communication becomes favorable, and transmits the signal by using the calculated transmit weights.

Thus, successive update of the receive weights as in the conventional LMS is not conducted, but a solution obtained by a transmit weight control method based on the arrival direction and power of the signal from the mobile station device is calculated as the transmit weights. Therefore, the transmit weights can be calculated fast. As a result, the quality of communication with the mobile station device can be improved.

The transmit weights of respective antennas are adjustment values of the amplitude and/or phase conducted on a signal for respective antennas when transmitting the same signal to be transmitted, from respective antennas. As for the transmit weights, transmit weights for adjusting both the amplitude and phase need not be necessarily used. Transmit weights for adjusting only the amplitude or transmit weights for adjusting only the phase may be used. By providing a plurality of antennas in the transceiver with such transmit weights, the antennas can implement transmit directivity according to the transmit weights as a whole.

As for the number of antennas, there are no special limits, but various numbers may be used.

As for the arrangement of the antennas, there are no special limits, but various arrangements may be used.

In a multipath environment, a signal transmitted from a transceiver to a mobile station device arrives at the mobile station device via a plurality of paths. When communication is conducted in such a multipath environment, a signal arriving at the mobile station device via one path among the paths is to be transmitted in some cases. In such a case, the signal of that path is regarded as the signal transmitted to the mobile station device serving as the opposite party of communication mentioned in the present invention. When transmitting the signal of that path, signals of other paths are regarded as, for example, interference signals.

Furthermore, in the case where a signal transmitted from a transceiver to a mobile station device arrives at the mobile station device via a plurality of paths, it is also possible to combine (a plurality of) signals arriving via a plurality of paths (by using, for example, the RAKE synthesis or the like) , in the mobile station device. Thereby, the quality of communication between the transceiver and the mobile station device can be improved.

As for the mode for detecting the arrival direction and/or power of a signal from a mobile station device, such a mode as to detect only the arrival direction may be used. Such a mode as to detect only the power, or such a mode as to detect both the arrival direction and power may also be used.

As for the mode for detecting the arrival direction and/or power, it is desirable to detect strict arrival direction and/or power value. However, the present invention incorporates such a mode as to detect the arrival direction and/or power by estimation.

As for power mentioned in the present invention, it is also possible as a preferred mode to detect a temporal (i.e., over a certain time width) average (average power) of power of a signal from a mobile station device.

As for the transmit weight control method based on the detection result mentioned in the present invention, a transmit weight control method based upon the detection result of the arrival direction is used, in the case where only the arrival direction is detected in the foregoing description. In the case where only the power is detected in the foregoing description, a transmit weight control method based upon the detection result of the power is used. In the case where both the arrival direction and power is detected in the foregoing description, a transmit weight control method based upon both the detection result of the arrival direction and the detection result of the power is used.

As for the mode of calculating the transmit weights of respective antennas by using a transmit weight control method based on the detection result of (the arrival direction and/or power), there may be used such a mode as to calculate the transmit weights of respective antennas according to a transmit weight control method using the detection result (as it is). Or there may be used such a mode as to calculate the transmit weights of respective antennas according to a transmit weight control method using a result obtained by correcting the detection result. Alternatively, there may be used such a mode as to select a transmit weight control method from among a plurality of (for example, previously prepared) transmit weight control methods on the basis of the detection result and calculate the transmit weights of respective antennas according to the selected transmit weight control method.

As the transmit weight control method, it is possible to use the co-phase equal amplitude excitation method of calculating the transmit weights on the basis of the transmission (radiation) direction of a signal to the mobile station device, or an SINR reference method of calculating the transmit weights on the basis of the transmission direction to the mobile station device and (transmission) power of the signal (for example, by calculating the Wiener solution described later). In the present invention, the transmission (radiation) direction of a signal to, for example, a mobile station device is determined on the basis of the arrival direction of a signal from the mobile station device. Furthermore, the (transmission) power of the signal to, for example, a mobile station device is determined on the basis of (reception) power of a signal from the mobile station device.

As for the condition that the quality of a signal received at a mobile station device becomes favorable, it is possible to use such a condition that the transmit level becomes high, such a condition that SINR becomes great, or such a condition that the SNR (Signal to Noise Ratio) becomes great. In the above described co-phase equal amplitude excitation method, there is conducted such computation as to maximize the transmit level of a signal to a mobile station device serving as an opposite party of transmission. In the above described SINR reference method, there is conducted such computation as to maximize the SINR of a signal to a mobile station device serving as an opposite party of transmission.

The solution mentioned in the present invention is a solution obtained by the transmit weight control method mentioned in the present invention as described above. The solution corresponds to the transmit weights of respective antennas.

A transceiver according to the present invention detects a compensation unnecessitating signal to be removed from subjects of transmit weight control (from, for example, a plurality of arrival signals), based on a preset condition, removes the detected compensation unnecessitating signals from subjects of transmit weight control, calculates transmit weights of respective antennas (i.e., by using a transmit weight control method based on, for example, the arrival direction and/or power of signals other than compensation unnecessitating signals), and transmits the signal to a mobile station device serving as an opposite party of communication by using the calculated transmit weights.

Even in the case where the number of mobile station devices which can communicate is large, compensation unnecessitating signals to be removed from subjects of transmit weight control are removed, and transmit weights are calculated. Therefore, interference signals in directions other than the transmission direction of a signal to a mobile station device serving as an opposite party of communication and other than directions of the compensation unnecessitating signals can be made sufficiently small. As a result, a transmit directivity better than that of the conventional technique can be implemented.

As for the preset condition, various conditions may be used. For example, it is possible to use such a condition that a high power signal is detected as a compensation unnecessitating signal, such a condition that a low power signal is detected as a compensation unnecessitating signal, or such a condition that a signal located near a signal to a mobile station device serving as an opposite party of communication (a signal located near a desired signal) is detected as a compensation unnecessitating signal.

To be concrete, if a high power signal is detected as a compensation unnecessitating signal, then the interference suppression effect for the direction of the high power signal is eliminated. However, the interference suppression effect for the directions of other signals (i.e., low power signals) can be increased. It is desirable to use such a detection condition, for example, when the characteristics (qualities against interference) of low power signals are poor as compared with the high power signal.

If a low power signal is detected as a compensation unnecessitating signal, then the interference suppression effect for the direction of the low power signal is eliminated. However, the interference suppression effect for the directions of other signals (i.e., high power signals) can be increased. It is desirable to use such a detection condition, for example, when the characteristic (quality against interference) of high power signals are poor as compared with the low power signal.

If a signal located near a desired signal is detected as a compensation unnecessitating signal, then the interference suppression effect for the direction of the signal located near the desired signal is eliminated. However, the interference suppression effect for the directions of other signals (i.e., signals which are not located near the desired signal) can be increased. Furthermore, the signal strength (power) for the direction of the desired signal can be increased. It is desirable to use such a detection condition, for example, when the characteristic (quality against interference) of a mobile station device (desired user) corresponding to the desired signal is poor as compared with mobile station devices (nearby users) corresponding to the nearby signals of the desired signal.

As for the preset condition, for example, a fixedly (pre)set condition may be used. A condition may be selectively set according to the communication situation from among a plurality of (previously prepared) conditions. To be concrete, such a mode that a condition corresponding to each mobile station device (each user) is selected and used, or such a mode that different conditions are used according to time can be used.

Furthermore, a transceiver according to the present invention corrects a detection result of the arrival direction and/or a detection result of the power so as to compensate a difference between a reception situation of a signal from a mobile station device and a transmission situation of a signal to the mobile station device, calculates the transmit weights according to a transmit weight control method, by using a result of the correction, and transmits the signal to the mobile station device serving as an opposite party of communication, by using the calculated transmit weights.

Even in the case where there is a difference in direction (arrival direction and transmission direction) and power (reception power and transmission power) between a reception situation of a signal from a mobile station device and a transmission situation of a signal to the mobile station device, the detection result of the arrival direction and the detection result of power are corrected, and the transmit weights are calculated. As a result, the quality of communication with a mobile station device can be improved.

As for such a mode as to correct the detection result of the arrival direction and/or the detection result of power, such a mode as to correct the detection result of the arrival direction is used in the case where only the arrival direction is detected and such a mode as to correct the detection result of power is used in the case where only the power is detected. In the case where both the arrival direction and power are detected, there is used such a mode as to correct only the detection result of the arrival direction, such a mode as to correct only the detection result of power, or such a mode as to correct both the detection result of the arrival direction and the detection result of power.

To be concrete, as an example, in the case where a signal frequency used in an up channel is different from that used in a down channel, the received antenna pattern implemented by the receive weights becomes slightly different from the transmit directivity implemented by the transmit weights, if the transmit weights are made the same as the receive weights. This is because the optical path difference between the antennas and wavelength depend on the signal frequencies of (the up channel and the down channel) . In other words, even if a null is formed by the receive weights corresponding to the up channel, if the direction of the null is the down channel (transmit weights) the direction of the null shifts by nearly several degrees. In the present invention, therefore, the detection result of, for example, the arrival direction is corrected so as to compensate the shift (difference) between the received antenna pattern and the transmit antenna pattern.

As another example, in the case where the signal power in the up channel is remarkably different from that in the down channel due to a difference in communication contents between the up channel and the down channel, a favorable transmit antenna pattern might not be implemented, if the power of a signal from a mobile station device serving as an opposite party of communication is regarded as power of a signal to the mobile station device (as it is). In the present invention, therefore, for example, the detection result of power is corrected so as to compensate such a shift (difference) of power in the transmit weights for the down channel, i.e., so as to implement a transmit antenna pattern with the power difference considered. As a concrete example, in the case where there is obtained such information that a low rate low power signal is used in the up channel whereas a high rate high power signal is used in the down channel, processing is conducted on reception power detected (for example, a power correction term is added to the reception power) on the basis of information that the transmission power becomes high. As a result, the quality of communication with a mobile station device serving as an opposite party of communication can be improved.

Some preferred configuration examples of a transceiver according to the present invention inclusive of the configurations heretofore described are described below.

In a configuration example of the present invention, a transceiver for receiving a signal transmitted from a mobile station device by using a plurality of antennas, providing each of the antennas with a transmit weight, thereby controlling transmit directivity of the antennas as a whole, and transmitting a signal to a mobile station device serving as an opposite party of communication includes: arrival direction detection means for detecting an arrival direction of a signal from a mobile station device serving as an opposite party of transmission; and transmission means for calculating a solution of a co-phase equal amplitude excitation method as transmit weights of respective antennas, based on the detected arrival direction, under such a condition that a transmit level of a signal to a mobile station device serving as an opposite party of communication becomes large, and transmitting the signal by using the calculated transmit weights. This is a configuration example of a transceiver using the co-phase equal amplitude excitation method as the transmission control method.

In a configuration example of the present invention, a transceiver for receiving a signal transmitted from a mobile station device by using a plurality of antennas, providing each of the antennas with a transmit weight, thereby controlling transmit directivity of the antennas as a whole, and transmitting a signal to a mobile station device serving as an opposite party of communication includes: arrival direction detection means for detecting an arrival direction of a signal from a mobile station device; power detection means for detecting power of the signal from the mobile station device; and transmission means for calculating a solution of an SINR reference method as transmit weights of respective antennas, based on the detected arrival direction and detected power, under such a condition that an SINR of a signal to be transmitted to a mobile station device serving as an opposite party of communication becomes large, and transmitting the signal by using the calculated transmit weights. This is a configuration example of a transceiver using the SINR reference method as the transmit weight control method.

In a configuration example of the present invention, a transceiver for receiving a signal transmitted from a mobile station device by using a plurality of antennas, providing each of the antennas with a transmit weight, thereby controlling transmit directivity of the antennas as a whole, and transmitting a signal to a mobile station device serving as an opposite party of communication includes: arrival direction detection means for detecting an arrival direction of a signal from a mobile station device; power detection means for detecting power of the signal from the mobile station device; and transmission means for selecting a transmit weight control method based on the detected arrival direction and detected power, calculating transmit weights of respective antennas by using the selected transmit weight control method so that a quality of a signal received at a mobile station device serving as an opposite party of communication may become better, and receiving the signal by using the calculated transmit weights. This is a configuration example of a transceiver which selects a transmit weight control method on the basis of the detected arrival direction and power.

In such a configuration, an optimum transmit weight control method can be selected according to, for example, the detected arrival direction and/or power. As a concrete example, there can be used such a control scheme that when transmitting a signal of low power to a mobile station device serving as an opposite party of communication, the co-phase equal amplitude excitation method is selected and the receive weights are controlled by using the co-phase equal amplitude excitation method, whereas when transmitting a signal of high power to a mobile station device serving as an opposite party of communication, the SINR reference method is selected and the receive weights are controlled by using the SINR method. Which transmit weight control method should be selected may be determined arbitrarily by considering features of the transmit weight control methods. As an example, the co-phase equal amplitude excitation method has an advantage that a solution can be calculated with a smaller amount of computation than that of the SINR reference method.

As an example, in the transceiver as heretofore described, the above described power detection means detects a time average value of power as power of a signal from a mobile station device.

As an example, the transceiver as heretofore described is installed in a base station device of a mobile radio communication system and/or a relay amplifying device (relay amplifier) of a mobile radio communication system.

Outlines of the generally known co-phase equal amplitude excitation method and SINR reference method will now be described.

The co-phase equal amplitude excitation method is a (receive and transmit) weight control method for calculating such a solution as make signal amplitudes (signal powers) of respective antennas equal and align the signal phases with the desired direction so as to implement a maximum signal strength (reception strength and/or transmission strength) in the desired direction. In the present invention, for example, the detected arrival direction (as it is) or the corrected arrival direction is used as the desired direction. In the co-phase equal amplitude excitation method, power information is not required.

To be concrete, in the co-phase equal amplitude excitation method, for example, receive weights corresponding to complex conjugate of an array response vector (of the desired signal) determined by using the information of the arrival direction of the desired signal are calculated as receive weights serving as a solution.

In the conventional weight control scheme using the co-phase equal amplitude excitation method, optimum weights are selected from a plurality set of prepared co-phase equal amplitude excitation weights (receive and/or transmit weights). On the other hand, in the present invention, weights (derived as one solution) are calculated by using the information of the detected arrival direction. As compared with the conventional scheme, therefore, (receive and/or transmit) weights can be calculated fast.

The SINR reference method is a weight control method for calculating such a solution as to implement a maximum SINR for the desired direction. In the present invention, calculation is conducted by using the detected arrival direction (itself or corrected one) or the detected power (itself or corrected one).

As an example, a Wiener solution which becomes weights (solution) implementing the maximum SINR is calculated from a correlation matrix R (where R is a matrix) determined by using the information of the detected arrival direction and the information of detected power, and an array response vector h (where h is a vector) (of a desired signal) determined by using the information of the detected arrival direction of the desired signal. To be concrete, Wiener solution W (where W is a vector) = $R^{-1} \cdot h^*$ holds true. Such a Wiener solution W is calculated by using, for example, information of arrival directions and power concerning all arrival signals (arrival waves).

In the conventional scheme, it is possible to generate a correlation matrix R (including noise) by using actual antenna inputs . Since the arrival directions are not known, however, the array response vector h cannot be generated, and the Wiener solution cannot be calculated.

The above described SINR reference, correlation matrix R, and the array response vector h are described in, for example, "'Adaptive array and mobile communication', Takeo Oogane and Yasutaka Ogawa, The transactions of the Institute of Electronics, Information and Communication Engineers, Dec. 1998 to March 1999".

For example, the array response vector h corresponds to a phase rotation vector of each antenna (element) which changes according to the arrival direction of the signal. For example, in the case where an adaptive array antenna is formed of N antenna (elements), the array response vector h becomes a vector having N rows and one column.

For example, the correlation matrix R becomes a matrix having N rows and N columns obtained by weighting products of complex conjugate of an array response vector h of respective signals and a transposition matrix of the array response vector with powers of respective signals and adding results.

As heretofore described, in the receiver and/or transceiver according to the present invention, signal communication (reception and transmission) having a high ratio of the desired user signal power to interference signal power level can be implemented by using a weight control method based on the detected arrival direction and detected power. As a result, a favorable antenna gain of the adaptive array can be obtained without requiring a very long time for weights to converge as in, for example, the conventional successive update using LMS.

BRIEF DESCRIPTION OF THE DRAWING

FIG. 1 is a diagram showing a configuration example of a CDMA base station device having a receiver according to a first embodiment of the present invention;
FIG. 2 is a diagram showing a configuration example of a CDMA base station device having a transceiver according to a second embodiment of the present invention;
FIG. 3 is a diagram showing a configuration example of a CDMA base station device having a transceiver according to a third embodiment of the present invention;
FIG. 4 is a diagram showing an example of an average interference suppression value AIS in each of excitation schemes;
FIG. 5 is a diagram showing an example of a result of simulation conducted for accumulated frequency distribution of the interference suppression value IS;
FIG. 6 is a diagram showing an example of a result of simulation conducted for transmit antenna pattern implemented by a CDMA base station device; and
FIG. 7 is a diagram showing an example of a result of simulation conducted for transmit antenna pattern implemented by a CDMA base station device.

DESCRIPTION OF THE PREFERRED EMBODIMENTS

Embodiments of the present invention will hereafter be described by referring to the drawing.
In the ensuing embodiments, there will be described the case where the present invention is applied to a CDMA base station device which has an adaptive array antenna and which conducts radio communication with a mobile station device by using the CDMA scheme.
First, a CDMA base station device having a receiver according to a first embodiment of the present invention will now be described.

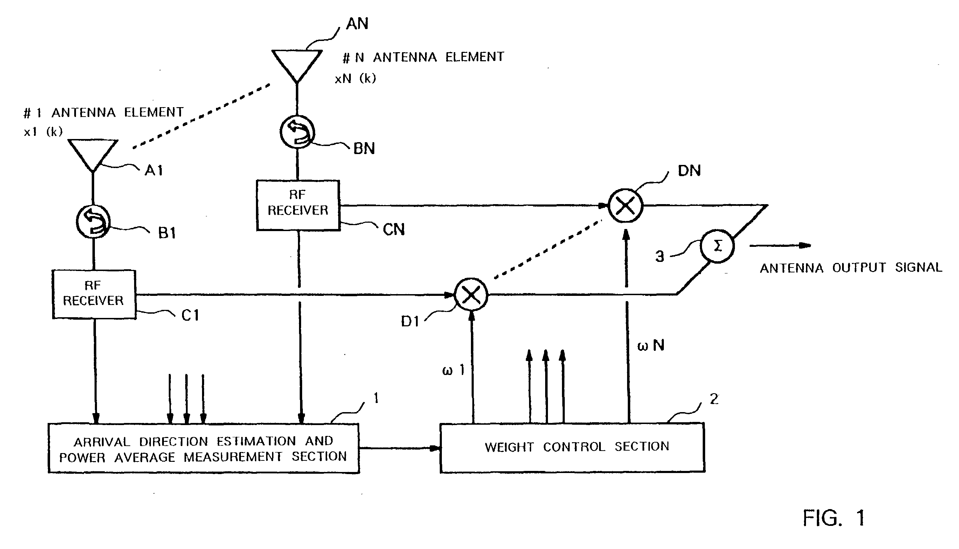

FIG. 1 shows a configuration example of a CDMA base station device having a receiver according to the present embodiment. The CDMA base station device includes a plurality of (N in the present embodiment) antennas (antenna elements) A1 to AN, a plurality of (N in the present embodiment) duplexers B1 to BN, a plurality of RF (radio frequency) receivers C1 to CN, an arrival direction estimation and power average measurement section 1, a (receive) weight control section 2, a plurality of (N in the present embodiment) (receive weight) multipliers D1 to DN, and an adder 3. In the present embodiment, a plurality of (N in the present embodiment) reception systems are included. Each reception system includes one of the antennas A1 to AN, one of the duplexers B1 to BN, one of the RF receivers C1 to CN, and one of the multipliers D1 to DN.
The antennas A1 to AN have a function of receiving a spread signal radio-transmitted from a mobile station device (in the present embodiment, a CDMA mobile station device using the CDMA scheme) and outputting the spread signal to the duplexers B1 to BN. On the other hand, the antennas A1 to AN have a function of radio-transmitting the spread signal inputted from the duplexers B1 to BN to the mobile station device.
The duplexers B1 to BN have a function of separating a transmission signal and a reception signal. To be concrete, the duplexers B1 to BN output signals inputted from the antennas A1 to AN to the RF receivers C1 to CN, and output signals inputted from RF transmitters (not illustrated) to the antennas A1 to AN. Thereby, the duplexers B1 to BN makes it possible to use the same antennas A1 to AN for both transmission and reception.
The RF receivers C1 to CN have a function of converting a frequency band of signals $x1(k)$ to $xN(k)$ received by the antennas A1 to AN and inputted via the dupulexers C1 to CN, from an RF (radio frequency) band to a baseband, outputting the converted (baseband) signals $x1(k)$ to $xN(k)$ to the multipliers D1 to DN, and outputting the converted signals $x1(k)$ to $xN(k)$ to the arrival direction estimation and power average measurement section 1 (common to all RF receivers C1 to CN).
By the way, "$(k)$" in "$xi(k)$" indicates that the signal value $xi$ is a function of time $k$. Furthermore, " $i$ in "$xi(k)$" indicates that "$x$" is a signal obtained by an $i$th (where $i$ = 1 to N) antenna included in N antennas forming an adaptive array antenna.

The arrival direction estimation and power average measurement section 1 has a function of detecting the arrival direction of a signal arriving from a mobile station device (to the CDMA base station device) by estimation, on the basis of signals inputted from the RF receivers C1 to CN, detecting average power (for example, in a preset time width) of the signal arriving from the mobile station device (to the CDMA base station device), and notifying a result of the arrival direction detection and a result of average power detection (or results obtained by conducting processing on these detection results) to the weight control section 2. By the way, the arrival direction and power detection is conducted as to all signals for which results of the arrival direction and power detection are needed in order to calculate weights by using, for example, the weight control section 2 described later.

Furthermore, in application to such communication of multipath environment that a spread signal transmitted from, for example, a mobile station device is received by the CDMA base station device via a plurality of paths, and a spread signal transmitted from the CDMA base station device arrives at a mobile station device via a plurality of paths, the arrival direction estimation and power average measurement section 1 of the present embodiment detects the arrival direction and power of each of signals (multipath signals) received from the mobile station device via a plurality of paths.

By using such a configuration as to separate signals x1(k) to xN(k) outputted from, for example, RF receivers C1 to CN into signals of respective paths and conduct RAKE synthesis on the same signals received via respective paths, the above described communication of the multipath environment can be made efficient. In the case where the CDMA scheme is used as in the present embodiment, signals of respective paths are separated at the time point when the received signal is despread by a spreading code. Furthermore, in the present embodiment, each mobile station device also has a function of conducting the RAKE synthesis. By using the function, each mobile station device conducts the RAKE synthesis on the same signals received from the CDMA base station device via a plurality of paths.

Here, as the method for detecting the arrival direction of a signal from a mobile station device, various methods may be used. If there is used as a favorable mode an estimation method of the arrival direction described in, for example, "'Adaptive array antenna for down channel of DS-CDMA system in multi-user environment', 'Meeting of Technical Group on Antenna, Propagation and Radio communication system', The Institute of Electronics, Information and Communication Engineers, February 18, 2000, Minako Kitahara, Yasutaka Ogawa, and Takeo Ogane", and Japanese Patent Application Publication No. 2000-037007, the signal arrival direction can be detected (by, for example, estimation) with a simple configuration. It is also possible to adopt such a configuration that the signal arrival direction is detected by using, for example, the MUSIC method and the ESPRIT method described with reference to the conventional technique.

The weight control section 2 has a function of calculating a solution (in the present embodiment, N complex number values ω 1 to ωN corresponding to the antennas A1 to AN) according to a predetermined receive weight control method by using, for example, the detection result of the arrival direction and/or the detection result of the average power notified by the arrival direction estimation and power average measurement section 1, as parameters, and outputting the solution to the multipliers D1 to DN as receive weights (N weights ω1 to ωN corresponding to the antennas A1 to AN) .

As the receive weight control method, various control methods may be used. For example, a co-phase equal amplitude excitation method or an SINR reference method can be used. In the co-phase equal amplitude excitation method, radiation of a maximum level is directed to the direction of a signal (desired signal) supplied from a mobile station device serving as the opposite party of communication. In the SINR reference method, the SINR in the direction of the desired signal is maximized.

The multipliers D1 to DN have a function of multiplying the signals x1(k) to xN(k) inputted from respective RF receivers C1 to CN respectively by the receive weights ω1 to ωN inputted from the weight control section 2, and outputting the results of multiplication to the adder 3. The receive weights ω1 to ωN correspond to the signals x1(k) to xN (k) received by respective antennas A1 to AN.

As described above, results obtained by multiplying the signals x1(k) to xN(k) supplied from the antennas A1 to AN by the receive weights ω1 to ωN respectively are inputted to the adder 3. The adder 3 obtains the sum total of N inputted multiplication results (x1(k)·ω1 to xN(k)·ωN), and outputs the sum total as a result (antenna output signal) of reception of a signal from a mobile station device serving as the opposite party of communication conducted by the adaptive array. The reception result thus obtained is subject to demodulation and so on in, for example, an external reception processing section which is not illustrated.

As heretofore described, the receive weights are converged in the conventional technique by the receive weight control method of successive computation type such as the LMS. On the other hand, in the receiver of the present embodiment, the receive weights can be calculated and used by using the receive weight control method whereby the receive weights can be calculated as a solution of computation of one time (computation which is not successive computation type) on the basis of the detected arrival direction and power. As compared with the conventional LMS or the like, therefore, the time required for forming the weights can be shortened. As a result, the qualities of communication with a mobile station device can be improved.

A CDMA base station device having a transceiver according to a second embodiment of the present invention will now be described.

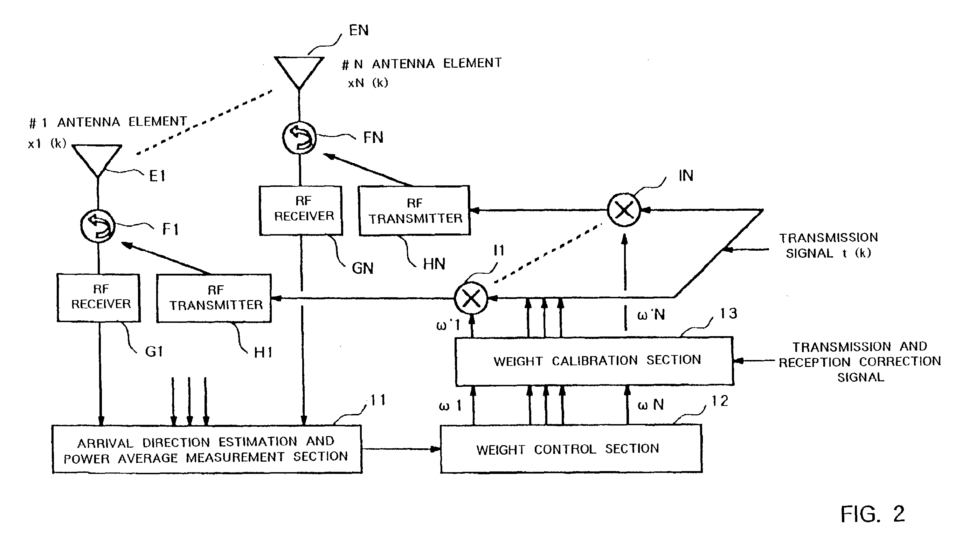

FIG. 2 shows a configuration example of a CDMA base station device having a transceiver according to the present embodiment. The CDMA base station device includes a plurality of (N in the present embodiment) antennas (antenna elements) E1 to EN, a plurality of (N in the present embodiment) duplexers F1 to FN, a plurality of RF (radio frequency) receivers G1 to GN, an arrival direction estimation and power average measurement section 11, a (transmit) weight control section 12, a (transmit) weight calibration section 13, a plurality of (N in the present embodiment) (transmit weight) multipliers I1 to IN, and a plurality of (N in the present embodiment) RF transmitters H1 to HN.

In the present embodiment, a plurality of (N in the present embodiment) reception systems and a plurality of (N in the present embodiment) transmission systems are included. Each reception system includes one of the antennas E1 to EN, one of the duplexers F1 to FN, and one of the RF receivers G1 to GN. Each transmission system includes one of the multipliers I1 to IN, one of the RF transmitters H1 to HN, one of the duplexers F1 to FN, and one of the antennas E1 to EN.

Functions of the antennas E1 to EN, the duplexers F1 to FN, the RF receivers G1 to GN, and the arrival direction estimation and power average measurement section 11 are the same as those of the first embodiment shown in FIG. 1.

Hereafter, the weight control section 12, the weight calibration section 13, the multipliers I1 to IN, and the RF transmitters H1 to HN will be described in detail.

The weight control section 12 has a function of calculating a solution (in the present embodiment, N complex number values $\omega 1$ to $\omega N$ corresponding to the antennas E1 to EN) according to a predetermined transmit weight control method by using, for example, the detection result of the arrival direction and/or the detection result of the average power notified by the arrival direction estimation and power average measurement section 1, as parameters, and outputting the solution to the weight calibration section 13 as transmit weights (N weights $\omega 1$ to $\omega N$ corresponding to the antennas E1 to EN).

As the transmit weight control method, various control methods may be used. For example, a co-phase equal amplitude excitation method or an SINR reference method can be used. In the co-phase equal amplitude excitation method, radiation of a maximum level is directed to the direction of a signal (desired signal) transmitted to a mobile station device serving as the opposite party of communication. In the SINR reference method, the SINR in the direction of the desired signal is maximized.

The weight calibration section 13 has a function of conducting predetermined calibration processing on N transmit weights $\omega 1$ to $\omega N$ inputted from the weight control section 12 on the basis of information of a transmission and reception correction signal inputted from, for example, an external control section which is not illustrated, and outputting resultant N weights $\omega' 1$ to $\omega' N$ respectively to the multipliers I1 to IN respectively corresponding to the antennas E1 to EN as (post-calibration) transmit weights.

The above described predetermined calibration processing is processing of removing the influence of the fact that complex amplitude characteristics of the RF receivers G1 to GN and complex amplitude characteristics of the RF transmitters H1 to HN differ from antenna to antenna of the antennas E1 to EN and from bus to bus. In the case where such calibration processing is not necessary, the weights $\omega 1$ to $\omega N$ outputted from, for example, the weight control section 12 are used as they are, as the above described transmit weights $\omega' 1$ to $\omega' N$.

A signal (transmission signal) t(k) to be transmitted to a mobile station device serving as the opposite party of communication is inputted to the multipliers I1 to IN. In addition, the transmit weights $\omega' 1$ to $\omega' N$ respectively corresponding to the antennas E1 to EN are inputted to the multipliers I1 to IN, respectively, by the weight calibration section 13. The multipliers I1 to IN have a function of multiplying the inputted transmission signal t(k) by the transmit weights $\omega' 1$ to $\omega' N$ and outputting resultant products ($\omega' 1 \cdot t(k)$ to $\omega' N \cdot t(k)$) to the RF transmitters H1 to HN, respectively. By the way, by multiplying the transmission signal t(k) by the transmit weights $\omega' 1$ to $\omega' N$, the multipliers I1 to IN adjust the amplitude and phase of the transmission signal t(k) according to the transmit weights $\omega' 1$ to $\omega' N$.

The RF transmitters H1 to HN have a function of converting a frequency band of signals inputted from the multipliers I1 to IN from a baseband to an RF band, and outputting the signals thus converted to the carrier frequency band (RF band) to the duplexers F1 to FN. And the signals outputted to the duplexers F1 to FN are radio-transmitted from the antennas E1 to EN, respectively.

For example, it is also possible to provide stages preceding the multipliers I1 to IN with the above described functions of the RF transmitters H1 to HN. In this case, the transmission signal t(k) is converted to a signal of the RF band, and then the transmission signal t(k) is multiplied by the transmit weights $\omega' 1$ to $\omega' N$.

As heretofore described, in the transceiver of the present embodiment, control similar to the weight control adopted in the case where, for example, the receiver of the first embodiment receives a signal from a mobile station device in an up channel is applied to weight control in the case where a signal is transmitted to the mobile station device in a down channel. In the same way as the first embodiment, there is obtained, for example, an effect that optimum weights are calculated fast. To be concrete, in the conventional technique, the transmit weights are converged by using the transmit weight control method of successive computation type such as the LMS. On the other hand, in the transceiver of the present embodiment, the transmit weights can be calculated and used by using the transmit weight control method whereby the transmit weights can be calculated as a solution of computation of one time (computation which is not successive computation type) on the basis of the detected arrival direction and power. As compared with the conventional LMS or the like, therefore, the time required for forming the weights can be shortened. As a result, the qualities of communication with a mobile station device can be improved.

Furthermore, even in the case where, for example, the frequency of a signal transmitted from a mobile station device to the CDMA base station device (frequency used in an up channel) differs from the frequency of a signal transmitted from the CDMA base station device to a mobile station device (frequency used in a down channel), the transceiver of the present embodiment can implement a transmit antenna pattern compensated with due regard to such a difference in communication situation between the up channel and the down channel (up and down asymmetric communication) by correcting the result of the arrival direction detection conducted by, for example, the arrival direction estimation and power average measurement section 11.

In the same way, the transceiver of the present embodiment can compensate a difference in signal power between the up channel and the down channel.

This will now be described concretely. Average power in arrival directions detected for a signal transmitted from, for example, a mobile station device is average power in the up channel. If the signal power (communication rate) used in the up channel is equal to that used in the down channel, then the average power of the signal used in the up channel is considered to be nearly equal to that used in the down channel. Therefore, it is effective to calculate the transmit weights of the down channel by using the average power in the up channel (as it is).

In the case where the signal power becomes higher (the communication rate becomes higher) only in the down channel by reason, for example, that data downloading is conducted in the down channel, however, the power (average power) detected for the signal transmitted from the mobile station device is comparatively low, whereas the power of the signal to be transmitted to the mobile station device is requested to be made comparatively high. In this case, the transceiver of the present embodiment can compensate the influence of a difference in communication quality between the up channel and the down channel, by correcting the detection result of the average power in the arrival direction estimation and power average measurement section 11, and notifying the average power after the correction (for example, power corresponding to the transmission signal weighted by the detected average power) to the weight control section 12.

A CDMA base station device having a transceiver according to a third embodiment of the present invention will now be described.

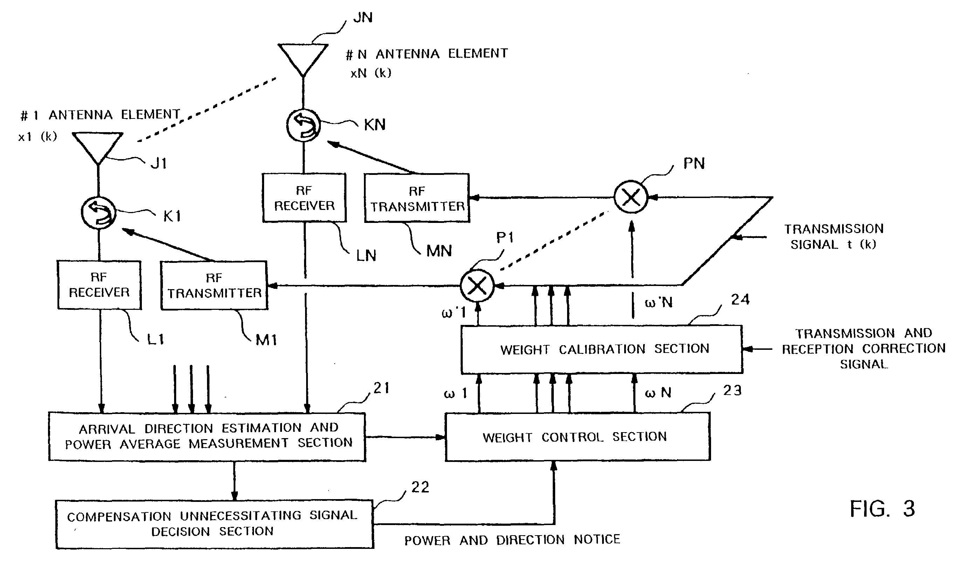

FIG. 3 shows a configuration example of a CDMA base station device having a transceiver according to the present embodiment. The CDMA base station device includes a plurality of (N in the present embodiment) antennas (antenna elements) J1 to JN, a plurality of (N in the present embodiment) duplexers K1 to KN, a plurality of RF (radio frequency) receivers L1 to LN, an arrival direction estimation and power average measurement section 21, a compensation unnecessitating signal decision section 22, a (transmit) weight control section 23, a (transmit) weight calibration section 24, a plurality of (N in the present embodiment) (transmit weight) multipliers P1 to PN, and a plurality of (N in the present embodiment) RF transmitters M1 to MN.

In the present embodiment, a plurality of (N in the present embodiment) reception systems and a plurality of (N in the present embodiment) transmission systems are included. Each reception system includes one of the antennas J1 to JN, one of the duplexers K1 to KN, and one of the RF receivers L1 to LN. Each transmission system includes one of the multipliers P1 to PN, one of the RF transmitters M1 to MN, one of the duplexers K1 to KN, and one of the antennas J1 to JN.

Functions of the antennas J1 to JN, the duplexers K1 to KN, the RF receivers L1 to LN, the arrival direction estimation and power average measurement section 21, the transmit weight calibration section 24, the multipliers P1 to PN, and the RF transmitters M1 to MN are the same as those of the second embodiment shown in FIG. 2. However, the arrival direction estimation and power average measurement section 21 of the present embodiment notifies the detection results of the arrival direction and power (or results obtained by conducting processing on these detection results) to the compensation unnecessitating signal decision section 22.

Hereafter, the compensation unnecessitating signal decision section 22 and the weight control section 23 will be described in detail.

On the basis of, for example, a preset condition, the compensation unnecessitating signal decision section 22 detects signals not to be subject to transmit weight control in the weight control section 23, from among signals transmitted from a mobile station device (for example, detected arrival signals of all paths) , as compensation unnecessitating signals. In addition, as to detected signals other than the compensation unnecessitating signals, the compensation unnecessitating signal decision section 22 notifies information of the arrival direction and power notified thereto by the arrival direction estimation and power average measurement section 21, to the weight control section 23.

Here, as compensation unnecessitating signals, there are detected, for example, such signals that it is considered to be unnecessary to remove the influence of interference caused by a desired signal in transmitting the desired signal (i.e., it is considered to be unnecessary to compensate interference). In the present embodiment, it is determined as to signals of all arrival directions detected by the arrival direction estimation and power average measurement section 21 whether each of the signals is a compensation unnecessitating signal.

As concrete decision criteria of compensation unnecessitating signals, there are such a decision criterion as to judge a transmission signal of high power to be a compensation unnecessitating signal, such a decision criterion as to judge a transmission signal of low power to be a compensation unnecessitating signal, and such a decision criterion as to judge a signal located near a desired signal to be a compensation unnecessitating signal. As an example, by selecting and using a decision criterion considered to make the communication qualities the best, from among a plurality of such decision criteria according to the communication situation, the qualities of communication with a mobile station device can be improved.

The weight control section 23 has a function of calculating a solution (in the present embodiment, N complex number values $\omega$1 to $\omega$N corresponding to the antennas J1 to JN) according to a predetermined transmit weight control method by using, for example, the detection result of the arrival direction and/or the detection result of the average power notified by the compensation unnecessitating signal decision section 22, as parameters, and outputting the solution to the weight calibration section 24 as transmit weights (N weights $\omega$1 to $\omega$N corresponding to the antennas J1 to JN).

As heretofore described, in the transceiver of the present embodiment, the degree of freedom of antenna (only) is used in required directions to form beams, intentionally without regarding compensation unnecessitating signals as interference signals (at the time of communication). Even in the case where, for example, the number of signals (the number of all paths) from the mobile station device is greater than the degree of freedom of antenna, therefore, the qualities of communication with a mobile station device can be improved. In other words, in the transceiver of the present embodiment, the degree of freedom of the array pattern is not used to, for example, lower the antenna gain (for example, directing nulls) at the time of transmission for reception directions of compensation unnecessitating signals. Therefore, the degree of freedom of the array pattern can be used preferentially to lower the antenna gain at the time of transmission for reception directions (user directions in which radiation should be suppressed) of other signals (except the desired signal). As a result, the degree of freedom of antenna (limited by the total number of antennas) can be utilized efficiently.

There will now be shown examples of simulation results concerning the case where the transmit weights are calculated by removing the compensation unnecessitating signals from subjects of the transmit weight control as described in the third embodiment. An effect obtained in the case where the compensation unnecessitating signals are removed from subjects of the transmit weight control will be described in comparison with the conventional technique. In the present embodiment, the case where signals located near the desired signal are detected as the compensation unnecessitating signal is shown. For convenience of description, examples of simulation results in the case where the transmit weight control is conducted by using N-LMS while removing the compensation unnecessitating signals from subjects of the transmit weight control are shown in the present embodiment. As for the effect obtained by removing the compensation unnecessitating signals from subjects of the transmit weight control, however, a similar effect can be obtained in the third embodiment as well.

In the simulation of the present embodiment, there is supposed a DS-CDMA radio communication system for conducting multi-rate service in which the magnitude of transmission power before despreading for a high-rate user is 12 dB, whereas the magnitude of transmission power before despreading for a low-rate user is 0 dB.

Furthermore, in the simulation of the present embodiment, the total number of antennas is 6. A linear array having antennas arranged in a rectilinear form is used. The gap between adjacent antennas is $(\lambda + \lambda')/4$, where $\lambda$ is a wavelength used in the up communication, and $\lambda'$ is a wavelength used in the down communication. In the present embodiment, $\lambda$ is different from $\lambda'$. In other words, the gap between adjacent antennas is set equal to half of the middle wavelength $(\lambda + \lambda')/2$ between the wavelength $\lambda$ and $\lambda'$. Furthermore, in the simulation of the present embodiment, it is supposed that the CDMA base station device is high antenna base station device having a three-sector configuration and the angle spread of each signal is sufficiently small.

In the present embodiment, attention is paid to interference caused on a low-rate user by a signal transmitted from the CDMA base station device to a high rate user. This is because the transmission power for the high rate user is greater than the transmission power for the low rate user, and consequently the power of a signal transmitted to the high rate user becomes interference of large power to the low-rate user.

Denoting an antenna gain at the time of transmission implemented in the arrival direction of a reference signal $r(k)$ in the CDMA base station device by Gh, and denoting an antenna gain at the time of transmission implemented in a gth path direction of each low rate user by Gg, interference suppression value is defined as IS = Gg/Gh. In this case, the interference suppression value IS represents relative strength of interference caused in the gth path direction of the low rate user by the signal transmitted from the CDMA base station device to the high rate user. As the interference suppression value IS becomes smaller, the interference caused in the gth path direction of the low rate user by the signal transmitted to the high rate user becomes smaller.

As described above, the CDMA base station device of the present embodiment regards signals arriving from an angle region (target region) considered to be located near the arrival direction of the reference signal, as the compensation unnecessitating signals, excludes the compensation unnecessitating signals in determining the weights, and generates an error signal e(k). For example, as the target region is made wider, the width of the main lobe becomes wider and the power levels of the signals transmitted to the side lobes become smaller. In this way, the trade-off relation holds true between the width of the main lobe and the power levels for the side lobes.

Two concrete examples of the way of setting a target region are shown. Hereafter, the ways of setting a target region are referred to as "first proposed scheme" and "second proposed scheme." Although in the present embodiment a mode which is desirable as the way of setting a target region is shown, a different way of setting may be used.

First, a way of setting a target region according to the "first proposed scheme" will now be described.

In the "first proposed scheme", the region of a main beam range of a co-phase equal amplitude excitation array which directs the main beam to the broad side direction (region interposed between first nulls) is set as a target region. As described above, the co-phase equal amplitude excitation is the simplest excitation method of making signal amplitudes of respective antennas equal and aligning the signal phase to a desired direction in such a way as to, for example, implement maximum radiation in the desired direction.

To be concrete, in, for example, a six-element linear array having six antennas, a target region determined by the "first proposed scheme" becomes a region having an angle range of $\pm20°$ ($\theta t = 20°$) with respect to the desired direction.

Subsequently, a way of setting a target region according to the "second proposed scheme" will now be described.

In the "second proposed scheme" , simulation is conducted under, for example, a predetermined condition (in the case of the present embodiment, a condition of the simulation of the present embodiment) and there is set such a target as to minimize an average value AIS (Average IS) of the interference suppression IS. In the simulation of the present embodiment, it is supposed that the total number of high rate user signals (the number of all paths) is 4 (= 2 terminals x 2 paths) and the number of low rate user signals (the number of all paths) is 60 (= 30 terminals x 2 paths).

Furthermore, in the simulation of the present embodiment, there is supposed such a statistic characteristic environment that the signal-to-noise ratio of high rate user signals before despreading is 12 dB and the signal-to-noise ratio of low rate user signals before despreading is 0 dB. Furthermore, in the simulation of the present embodiment, it is supposed that each antenna is a sector antenna having a width of 120°. It is supposed that the directivity f2(θ) of each antenna is represented by equation (6) when the angle direction θ is $0° \leq |\theta| \leq 120°$ and it is represented by equation (7) when the angle direction θ is $120° \leq |\theta| \leq 180°$. In the equations (6) and (7), "j" is represented by equation (8).

$$f^2(\theta) = [\cos(\theta/2)]^j \tag{6}$$

$$f^2(\theta) = [\cos(60°)]^j \tag{7}$$

$$j = (-3)/\{ 10' \text{ Log } |\cos 30°|\} \tag{8}$$

Furthermore, in the "second proposed scheme" of the present embodiment, it is supposed that arrival angles of all signals arriving at, for example, the CDMA base station device are random. To be concrete, it is supposed that signals from high rate users arrive from random angle directions respectively included in regions ranging from -60° direction to 60° direction (sector ranges of -60° to 60°). It is also supposed that signals from low rate users arrive from random angle directions respectively included in regions ranging from -90° direction to 90° direction (sector ranges of -90° to 90°).

Furthermore, in the "second proposed scheme" of the present embodiment, there is supposed such an ideal state that paths have no correlation to each other. First, the interference suppression value IS is calculated with regard to the weights ωi (Wiener solution) in such a state, and an average value AIS of the interference suppression value IS is calculated. And in the "second proposed scheme" of the present embodiment, for example, the AIS values are calculated while changing the angle width θt of the target region to various values (i.e., with regard to various target regions). A target region minimizing the AIS value is found. Such a target region is adopted and set.

To be concrete, in the case of the present embodiment, a target region determined by the "second proposed scheme" becomes a region having an angle range of $\pm30°$ ($\theta t = 30°$) with regard to the desired direction.

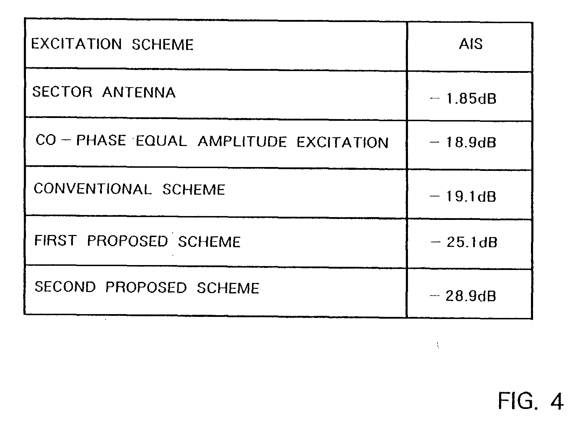

FIG. 4 shows an example of the AIS value obtained when each excitation scheme is used. To be concrete, the AIS value becomes -1.85 dB when a sector antenna is used. When such a co-phase equal amplitude excitation method as to direct a main beam to a desired high rate user direction is used, the AIS value becomes -18.9 dB. When the "conventional scheme" mentioned in the description of the conventional technique is used, the AIS value becomes -19.1 dB. When the "first proposed scheme" of the present embodiment is used, the AIS value becomes -25.1 dB. When the "second proposed scheme" of the present embodiment is used, the AIS value becomes -28.9 dB. If the "first proposed scheme" or the "second proposed scheme" of the present embodiment which takes the compensation unnecessitating signals in consideration, the AIS value can be thus remarkably reduced as compared with, for example, the case where the sector antenna, the co-phase equal amplitude excitation method, or the "conventional scheme" which does not take the compensation unnecessitating signals in consideration is used.

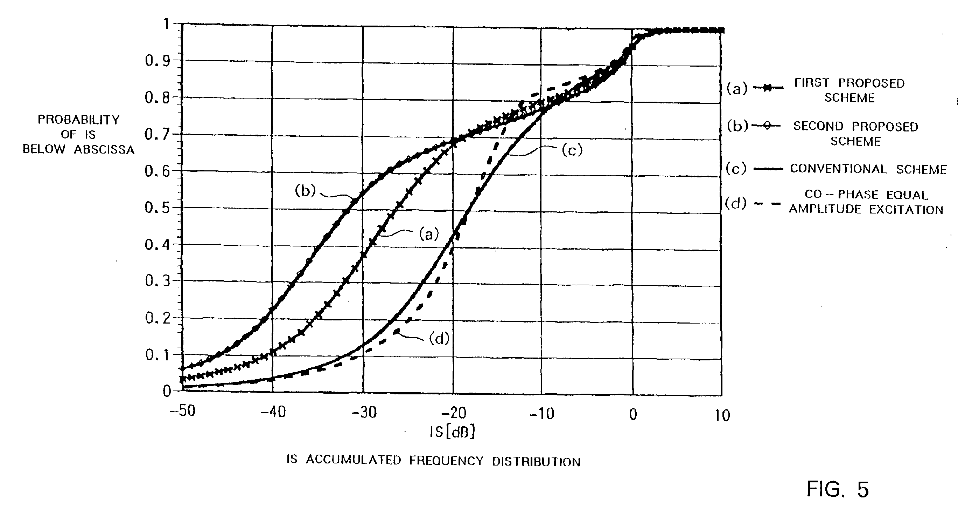

FIG. 5 shows an example of results of simulation conducted on accumulated frequency distribution of the interference suppression value IS with regard to a CDMA base station device using the "first proposed scheme" of the present embodiment (indicated by (a)), a CDMA base station device using the "second proposed scheme" of the present embodiment (indicated by (b)), a CDMA base station device using the "conventional scheme" (indicated by (c)), and a CDMA base station device using the "co-phase equal amplitude excitation method" conducted on the basis of, for example, the estimation result of the desired signal direction (indicated by (d)).

In the graph of FIG. 5, the axis of abscissas indicates the interference suppression value IS [dB], and the axis of ordinates indicates a probability of implementation of an interference suppression value which is equal to or less than an interference suppression value indicated by the axis of abscissas. As represented by the graph of FIG. 5, the CDMA base station device using the "conventional scheme" and the CDMA base station device using the "co-phase equal amplitude excitation method" have nearly the same interference suppression characteristics. On the other hand, in the CDMA base station device using the "first proposed scheme" or the "second proposed scheme" of the present embodiment, a great effect of interference suppression has been obtained.

Especially in the CDMA base station device, the probability that the interference suppression value IS will become less than approximately -10 dB is greater as compared with the CDMA base station device using the "conventional scheme" or the like. To be concrete, the probability that, for example, the interference suppression IS = -20 dB will be achieved becomes approximately 0.4 in the adaptive array using the "conventional scheme" or the "co-phase equal amplitude excitation method". On the other hand, the probability that the interference suppression IS = -20 dB will be achieved becomes approximately 0.7 in the case where the "first proposed scheme" or the "second proposed scheme" of the present embodiment is used. Furthermore, in such a range that, for example, the interference suppression value IS < -20 dB, the interference suppression characteristic becomes better in the case where the "second proposed scheme" is used as compared with the case where the "first proposed scheme" is used.

In this way, in the CDMA base station device which removes the compensation unnecessitating signals from subjects of the transmit weight control, the degree of freedom of antenna can be utilized effectively for the purpose of, for example, reducing the interference on low rate users which are comparatively susceptible to interference, as compared with the case where the conventional CDMA base station device is used.

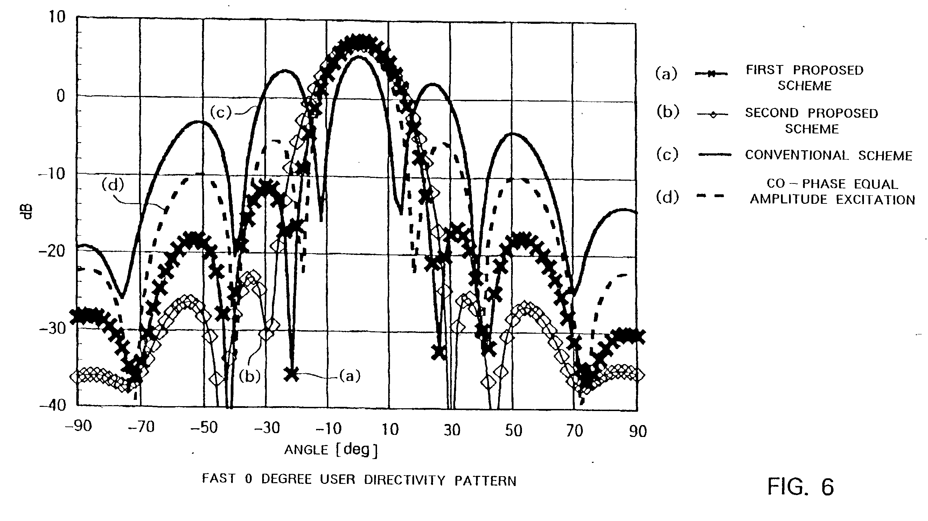

FIG. 6 shows an example of simulation results of a transmit antenna pattern obtained in the case where multi-rate service is conducted and a mobile station device serving as an opposite party of transmission of the CDMA base station device is a high rate user. In this simulation, it is supposed that the total number of signals from high rate users arriving at the CDMA base station device (i.e., the total number of high rate user paths) is four. It is also supposed that a preceding wave in a 0° direction and a one-chip delay wave in a 10° direction arrive from one (first high rate user) of two high rate users and a preceding wave in a -15° direction and a one-chip delay wave in a -10° direction arrive from the other (second high rate user) of the two high rate users.

Furthermore, it is supposed in this simulation that the total number of signals from low rate users arriving at the CDMA base station device (i.e., the total number of low rate user paths) is 60. It is also supposed that a preceding wave in a -90° direction and a one-chip delay wave in a -87° direction arrive from a first low rate user of 30 high rate users. It is thus supposed that all of 60 paths are distributed in an angle range of -90° to 90° at equal angle intervals (i.e., at intervals of 3° angle width).

Furthermore, in this simulation, a signal located near the probe side direction of the linear array is selected as the reference signal by taking the fact that statistic characteristics are supposed and the propagation distance values of respective paths are equal into consideration. To be concrete, a signal from the first high rate user arriving from the 0° direction is selected as the reference signal (desired signal). Furthermore, in this simulation, all signals arriving from the target region, and all multipath signals which are signals from high rate users except the signal selected as the reference signal are selected as compensation unnecessitating signals.

By the way, in the present embodiment, high rate user signals of the 10° direction, -15° direction and -10° direction are included in the target region of the present embodiment. Therefore, there are no signals selected as the above described multipath signals.

Furthermore, in the present embodiment, there is shown a transmit antenna pattern obtained by using the N-LMS algorithm as described above.

The axis of abscissas of the graph shown in FIG. 6 indicates an angle direction [deg] seen from, for example, the CDMA base station device. The axis of ordinates indicates a power level [dB] of a signal transmitted to the angle direction. In the same way as FIG. 5, the graph of FIG. 6 shows transmit antenna patterns with regard to a CDMA base station device using the "first proposed scheme" of the present embodiment (indicated by (a)), a CDMA base station device using the "second proposed scheme" of the present embodiment (indicated by (b)), a CDMA base station device using the "conventional scheme" (indicated by (c)), and a CDMA base station device using the "co-phase equal amplitude excitation method" (indicated by (d)).

In the adaptive array using, for example, the "conventional scheme", the antenna gain in the multipath signal direction is preferentially reduced, in the case where a multipath signal of a high rate user exists in the vicinity of the desired signal as in the present simulation. Therefore, the main lobe becomes narrow and the levels of the side lobes rise as represented by the graph of FIG. 6. Even as compared with the case where the "co-phase equal amplitude excitation methods" is used, great interference is given to low rate users existing in the side lobe directions, in the case where the "conventional scheme" is used.

On the other hand, in the CDMA base station devices adopting the "first proposed scheme" and "second proposed scheme" of the present embodiment, the width of the main lobe becomes slightly wide, as compared with the case where, for example, the above described "conventional scheme" or "co-phase equal amplitude excitation method" is adopted. In the CDMA base station devices adopting the "first proposed scheme" and "second proposed scheme" of the present embodiment, however, the degree of freedom of the array pattern is utilized effectively, and the antenna gains for a large number of low rate users susceptible to interference existing in the side lobe directions are sufficiently lowered. Especially in the case where the "second proposed scheme" is used, the target region is set to be wider as compared with the case where the "first proposed scheme" is used. In the case where the "second proposed scheme" is used, therefore, the transmit power level for each side lobe direction is remarkably suppressed although the width of the main lobe becomes slightly wider, as compared with the case where the "first proposed scheme" is used.

In other words, in the CDMA base station device which removes the compensation unnecessitating signals from subjects of the transmit weight control, it is possible to transmit a signal with a high antenna gain for an angle direction (main lobe direction) corresponding to the high rate user signal selected as, for example, the reference signal. In addition, the antenna gain for angle directions (side lobe directions) apart from the angle direction (main lobe direction) can be lowered as compared with the conventional CDMA base station device. Therefore, interference given in such angle directions can be reduced.

In this way, in the CDMA base station device which removes the compensation unnecessitating signals from subjects of the transmit weight control, the degree of freedom of the array pattern is not used for directing nulls to nearby directions of a signal selected as the reference signal. Therefore, a favorable transmit antenna pattern can be implemented and the degree of freedom of the array pattern can be utilized effectively.

In the present embodiment, a low rate user existing in the main lobe is sometimes subjected to comparatively great interference. As regards such a low rate user, the interference suppression characteristic is improved by conducting, for example, transmission power control and thereby making the signal power greater.

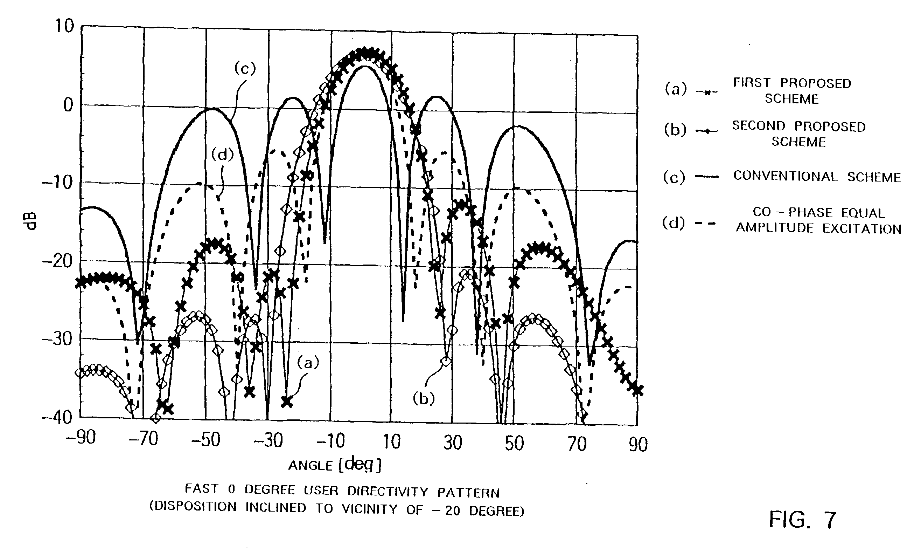

FIG. 7 shows an example of simulation results of a transmit antenna pattern conducted under conditions similar to those of simulation conditions described with reference to FIG. 6. However, it is supposed that ten low rate users (the number of paths is 20 in total) exist in an angle direction of -30° to an angle direction of -40° in a concentrative manner. It is also supposed that low rate user signals from these low rate users arrive at the CDMA base station device over a range from an angle direction of -30° to an angle direction of -40° at equal angle intervals (i.e., at intervals of 0.5° angle width). In this simulation, it is supposed that 20 remaining low rate users (where the number of paths is 40 in total) are distributed in angle directions ranging from -90° to -40° and angle directions ranging from -30° to 90° at equal angle intervals (i.e., at intervals of 4.25° angle width).

The axis of abscissas of the graph shown in FIG. 7 indicates an angle direction [deg] seen from, for example, the CDMA base station device. The axis of ordinates indicates a power level [dB] of a signal transmitted to the angle direction. In the same way as FIG. 5, the graph of FIG. 7 shows transmit antenna patterns with regard to a CDMA base station device using the "first proposed scheme" of the present embodiment (indicated by (a)), a CDMA base station device using the "second proposed scheme" of the present embodiment (indicated by (b)), a CDMA base station device using the "conventional scheme" (indicated by (c)), and a CDMA base station device using the "co-phase equal amplitude excitation method" (indicated by (d)).

As shown in the graph of FIG. 7, there can be obtained, in the CDMA base station device using the "first proposed scheme" or the "second proposed scheme" of the present embodiment, such an effect that the antenna gain in angle directions ranging from - 30° to -40° in which low rate user signals are concentrated. To be concrete, if, for example, the "first proposed scheme" is used, the antenna gain in the angle direction of -30° is lowered by approximately 10 dB as compared with the case shown in FIG. 6. If, for example, the "second proposed scheme" is used, the antenna gain in the angle direction of -35° is lowered by approximately 4 dB as compared with the case shown in FIG. 6.

In this way, the CDMA base station device using the "first proposed scheme" or the "second proposed scheme" of the present embodiment has a capability of forming a directivity pattern in conformity with the environment. Even in the case where there is an inclination in a space where a user terminal (mobile station device) exists as described above, therefore, the interference suppression characteristics can be improved by utilizing the inclination effectively, as compared with the CDMA base station device which conducts transmission by using, for example, a mere low side lobe array.

By the way, as described above, the result examples of the simulation concerning the CDMA base station device using the "first proposed scheme" or the "second proposed scheme" of the present embodiment shown in graphs of FIGS. 6 and 7 are transmit antenna patterns using the N-LMS algorithm.

The result example of the simulation concerning the CDMA base station device using the adaptive array antenna according to the conventional example ("conventional scheme") shown in each of the graphs of FIGS. 6 and 7 is a transmit antenna pattern obtained by using the N-LMS algorithm in the case where MMSE control is conducted while leaving all signals other than the signal selected as the reference signal (i.e., even the signal selected as the compensation unnecessitating signal in the present embodiment) in the error signal e(k). In the case where the conventional technique is used, the degree of freedom of the array pattern is used also to lower the antenna gain for nearby directions of the reference signal. Therefore, the maximum radiation direction of the transmit antenna pattern is deviated from the arrival direction of the reference signal (direction of 0° in the present embodiment). In addition, interference suppression for an angle direction which is comparatively apart from the arrival direction of the reference signal is insufficient.

As heretofore described, in the CDMA base station device which removes the compensation unnecessitating signals from subjects of the transmit weight control, the communication characteristics of a mobile station device existing in a communication capable region can be improved. To be concrete, even in, for example, down communication in such a situation that the number of mobile station devices existing in a communication capable region is large and the degree of freedom of the array pattern is overwhelmingly insufficient, interference given to, for example, low rate users susceptible to interference can be reduced remarkably by utilizing the degree of freedom effectively.

The configurations of the receiver and the transceiver according to the present invention are not limited to those described heretofore, but various configurations may also be used.

Furthermore, application fields of receiver and the transceiver according to the present invention are not limited to those described heretofore, but the present invention can be applied to various fields. As an example, the application field of the present invention can be applied not only a communication device adopting the CDMA scheme, but also communication devices using various communication schemes.

As for various kinds of processing conducted by the receiver or the transceiver according to the present invention, there may be used a configuration controlled by execution of a control program stored in a ROM, conducted by a processor in hardware resources having the processor and a memory. For example, each function means for executing the processing may also be formed as an independent hardware circuit.

Furthermore, the present invention can be grasped as a computer readable recording medium storing the control program such as a floppy disk or a CD-ROM, or as the program (itself). By inputting the control program from the recording medium to a computer and making the processor execute the control program, processing according to the present invention can be performed.

As heretofore described, in providing each of a plurality of antennas with a receive weight, thereby controlling receive directivity of the antennas as a whole, and receiving a signal transmitted from a mobile station device serving as an opposite party of communication, a receiver according to the present invention detects an arrival direction and/or power of a signal from a mobile station device; calculates a solution of a receive weight control method as receive weights of respective antennas, based on a result of the detection, under such a condition that a received quality of a signal transmitted from a mobile station device serving as an opposite party of communication becomes favorable; and receives the signal by using the calculated receive weights. Therefore, for example, the receive weights can be calculated fast. As a result, qualities of communication with a mobile station device can be improved.

Furthermore, in receiving a signal transmitted from a mobile station device by using a plurality of antennas, providing each of the antennas with a transmit weight, thereby controlling transmit directivity of the antennas as a whole, and transmitting a signal to a mobile station device serving as an opposite party of communication, a transceiver according to the present invention detects an arrival direction and/or power of a signal from a mobile station device; calculates a solution of a transmit weight control method as transmit weights of respective antennas, based on a result of the detection, under such a condition as to make favorable a quality of a signal received at a mobile station device serving as an opposite party of communication; and transmits the signal by using the calculated transmit weights. Therefore, for example, the transmit weights can be calculated fast. As a result, qualities of communication with a mobile station device can be improved.

**Claims**

1. A receiver for providing each of a plurality of antennas with a receive weight, thereby controlling receive directivity of the antennas as a whole, and receiving a signal transmitted from a mobile station device serving as an opposite party of communication, said receiver including:

   means for detecting an arrival direction and/or power of a signal from a mobile station device; and
   means for calculating a solution of a receive weight control method as receive weights of respective antennas, based on a result of the detection, under such a condition that a received quality of a signal transmitted from a mobile station device serving as an opposite party of communication becomes favorable, and receiving the signal by using the calculated receive weights.

2. A transceiver for receiving a signal transmitted from a mobile station device by using a plurality of antennas, providing each of the antennas with a transmit weight, thereby controlling transmit directivity of the antennas as a whole, and transmitting a signal to a mobile station device serving as an opposite party of communication, said transceiver including:

   means for detecting an arrival direction and/or power of a signal from a mobile station device; and
   means for calculating a solution of a transmit weight control method as transmit weights of respective antennas, based on a result of the detection, under such a condition as to make favorable a quality of a signal received at a mobile station device serving as an opposite party of communication, and transmitting the signal by using the calculated transmit weights.

3. A transceiver according to claim 2, including:

   means for detecting compensation unnecessitating signals to be removed from subjects of transmit weight control, based on a preset condition; and
   means for removing the detected compensation unnecessitating signals from subjects of transmit weight control and calculating transmit weights of respective antennas, and transmitting the signal to a mobile station device serving as an opposite party of communication by using the calculated transmit weights.

4. A transceiver according to claim 2 or claim 3, including:

   means for correcting a detection result of the arrival direction and/or a detection result of the power so as to compensate a difference between a reception situation of a signal from a mobile station device and a transmission situation of a signal to the mobile station device; and
   means for calculating the transmit weights according to the transmit weight control method, by using a result of the correction, and transmitting the signal to the mobile station device serving as an opposite party of communication, by using the calculated transmit weights.

5. A receiver according to claim 1, including:

   arrival direction detection means for detecting an arrival direction of a signal from a mobile station device serving as an opposite party of communication; and
   reception means for calculating a solution of a co-phase equal amplitude excitation method as receive weights of respective antennas, based on the detected arrival direction, under such a condition that a receive power level of a signal transmitted from a mobile station device serving as an opposite party of communication becomes large, and receiving the signal by using the calculated receive weights.

6. A receiver according to claim 1, including:

   arrival direction detection means for detecting an arrival direction of a signal from a mobile station device;
   power detection means for detecting power of the signal from the mobile station device; and
   reception means for calculating a solution of an SINR reference method as receive weights of respective antennas, based on the detected arrival direction and detected power, under such a condition that an SINR of a signal transmitted from a mobile station device serving as an opposite party of communication becomes large, and receiving the signal by using the calculated receive weights.

**7.** A receiver according to claim 1, including:

arrival direction detection means for detecting an arrival direction of a signal from a mobile station device;
power detection means for detecting power of the signal from the mobile station device; and
reception means for selecting a receive weight control method based on the detected arrival direction and detected power, calculating receive weights of respective antennas by using the selected receive weight control method so that a received quality of a signal from a mobile station device serving as an opposite party of communication may become better, and receiving the signal by using the calculated receive weights.

**8.** A transceiver according to claim 2, including:

arrival direction detection means for detecting an arrival direction of a signal from a mobile station device serving as an opposite party of communication; and
transmission means for calculating a solution of a co-phase equal amplitude excitation method as transmit weights of respective antennas, based on the detected arrival direction, under such a condition that a transmit level of a signal to a mobile station device serving as an opposite party of communication becomes large, and transmitting the signal by using the calculated transmit weights.

**9.** A transceiver according to claim 2, including:

arrival direction detection means for detecting an arrival direction of a signal from a mobile station device;
power detection means for detecting power of the signal from the mobile station device; and
transmission means for calculating a solution of an SINR reference method as transmit weights of respective antennas, based on the detected arrival direction and detected power, under such a condition that an SINR of a signal to be transmitted to a mobile station device serving as an opposite party of communication becomes large, and transmitting the signal by using the calculated transmit weights.

**10.** A transceiver according to claim 2, including:

arrival direction detection means for detecting an arrival direction of a signal from a mobile station device;
power detection means for detecting power of the signal from the mobile station device; and
transmission means for selecting a transmit weight control method based on the detected arrival direction and detected power, calculating transmit weights of respective antennas by using the selected transmit weight control method so that a quality of a signal received at a mobile station device serving as an opposite party of communication may become better, and transmitting the signal by using the calculated transmit weights.

FIG. 1

EP 1 207 630 A2

EN

# N ANTENNA ELEMENT
xN (k)

# 1 ANTENNA ELEMENT
x1 (k)

E1

FN

F1

IN

RF
RECEIVER

RF
TRANSMITTER

TRANSMISSION
SIGNAL t (k)

RF
RECEIVER

RF
TRANSMITTER

GN

HN

I1

$\omega'$1

$\omega'$N

13

G1

H1

WEIGHT CALIBRATION SECTION

TRANSMISSION AND
RECEPTION CORRECTION
SIGNAL

11

$\omega$ 1

$\omega$ N

12

ARRIVAL DIRECTION ESTIMATION AND
POWER AVERAGE MEASUREMENT SECTION

WEIGHT CONTROL SECTION

FIG. 2

FIG. 3

EP 1 207 630 A2

| EXCITATION SCHEME | AIS |
|---|---|
| SECTOR ANTENNA | − 1.85dB |
| CO − PHASE EQUAL AMPLITUDE EXCITATION | − 18.9dB |
| CONVENTIONAL SCHEME | − 19.1dB |
| FIRST PROPOSED SCHEME | − 25.1dB |
| SECOND PROPOSED SCHEME | − 28.9dB |

FIG. 4

IS ACCUMULATED FREQUENCY DISTRIBUTION

FIG. 5

FAST 0 DEGREE USER DIRECTIVITY PATTERN

FIG. 6

(a) FIRST PROPOSED SCHEME
(b) SECOND PROPOSED SCHEME
(c) CONVENTIONAL SCHEME
(d) CO-PHASE EQUAL AMPLITUDE EXCITATION

EP 1 207 630 A2

FAST 0 DEGREE USER DIRECTIVITY PATTERN
(DISPOSITION INCLINED TO VICINITY OF − 20 DEGREE)

FIG. 7

(a) —✱— FIRST PROPOSED SCHEME

(b) —✦— SECOND PROPOSED SCHEME

(c) —— CONVENTIONAL SCHEME

(d) −− CO − PHASE EQUAL AMPLITUDE EXCITATION

EP 1 207 630 A2